# EUROPEAN PATENT SPECIFICATION

(11) **EP 1 847 304 B1**
(45) Date of publication and mention of the grant of the patent: **09.09.2009**
(21) Application number: 07103138.9
(22) Date of filing: 27.02.2007
(51) Int. Cl.: A63B 69/00, A63B 22/00

(54) **Exercise Assistant System and Method for Managing Exercise Strength in Conjunction with Music**
Trainingsassistenzsystem und Verfahren zum Einstellen der Trainingsbelastung in Verbindung mit Musik
Système d'assistant d'exercices et procédé de gestion de la force des exercices conjointement à la musique

(30) Priority: 21.04.2006 KR 20060036427
(43) Date of publication of application: 24.10.2007
(73) Proprietor: Samsung Electronics Co., Ltd., Suwon-si, Gyeonggi-Do (KR)
(72) Inventor: Hong, Hyun Su No. 517-1802, Yangjimaeul Hanyang Apt., Gyeonggi-do (KR); Park, Sook Min No. 333-203, Samsung Raemian Apt.,, Seoul (KR); Kwak, Se Jin, Seoul (KR)
(74) Representative: Grünecker, Kinkeldey, Stockmair & Schwanhäusser Anwaltssozietät

(56) References cited:
- EP-A- 1 512 370
- WO-A1-20/05082472
- DE-A1- 19 522 958
- JP-A- 2001 299 980
- US-A- 5 164 967
- US-B1- 6 230 047

## Description

### BACKGROUND OF THE INVENTION

### 1. Field of the Invention

The present invention relates to an exercise assistant system and method and, in particular, to an exercise assistant system and method for managing an exercise pattern in conjunction with music.

### 2. Background of the Related Art

Recently, various types of exercisers have been developed and introduced into the market to help people exercise effectively. The exercise equipment has been designed in order for the user to accomplish the exercise routine without boredom.

Various kinds of exercise assistant devices equipped with body signal sensors or exercise signal sensors have been developed to assist people in accurately controlling their exercise routine and knowing their biological condition during the exercises.

Recently, the exercise assistant devices have been integrated with portable music players (for example, an MP3 player). Such exercise assistant devices can measure the exercise amount on the basis of the body signals and the exercise signals and playback music that is preset for the measured exercise amount. Also, the exercise assistant device can automatically adjust the playback speed and rhythm of the music according to the exercise pattern.

Most conventional exercise assistant devices provide the user with information on the exercise amount and physical status of the body such as heart rate and temperature so that the user can control the exercise amount by referring to the information.

However, the conventional exercise assistant device is disadvantageous, especially when the user does not know the accurate exercise amount and strength level in consideration with the information provided by the device. That is, the provision of only the physical variation and exercise amount information is of no effect for the user to decide the next exercise amount and strength level.

Also, the exercise assistant device equipped with the music playback function is limited in usage convenience, since a play list of music files to be played should be preset to repeat the same music files. Furthermore, the conventional music playback function embedded exercise assistant device has a drawback in that the music files are played back in a preset order and the user must manipulate the buttons for resetting the music files to be played and the playback order, resulting in boredom and inconvenience.

JP 2001-299 980 A discloses an exercise system device with an exercise schedule unit and a music designation unit. Further, a memory or storage unit is also used, as well as a control unit, a speaker, and a display unit. A motion sensor is used for detecting a tempo of motion, wherein it is then possible to correct the music tempo in accordance with the user's tempo of motion.

WO 2005/082472 A1 discloses an audio pacing device with a heart rate monitor, a processing unit, and a storage unit. Further, an output unit and a speaker are disclosed, as well as an indication unit. A number of BPM categorized audio signals are stored in the storage unit, wherein the audio signal is selected and dependent on the sampled heart rate to appropriately select it for the user's physical exercise.

### Summary of the Invention

It is an object of the present invention to provide an exercise assistance device and a method for managing an exercise assistance device to enable effective adjustment of the exercise amount or pattern, according to the user's biological change and achievement during the exercise to motivate the user to further exercise by providing music that properly matches the corresponding exercise pattern.

According to a further aspect of the invention, a system and method are provided that are capable of enhancing the user's vitality by providing music in harmony with the exercise pattern, wherein corresponding music files may be selected in consideration of the accumulated exercise amount and current exercise pattern.

According to further aspects of the present invention, a system and method are provided that are capable of allowing the user to exercise while being guided by the music files played back in harmony with the user's biological change in achieved exercise amount.

The object is solved by the features of the independent claims.

Advantageous embodiments are disclosed by the sub claims.

The user information includes body dimension information such as height, weight, age, and gender; target exercise information such as target exercise amount, target exercise time, target distance, maximum exercise amount, and maximum movement distance; exercise amount information such as accumulated exercise amount, elapsed exercise time, and accumulated movement distance; exercise strength information such as speed, footstep frequency, pace, weight distribution; biological information such as pulse rate, body temperature, and blood pressure; and preference information such as preferred size of the exercise period, a preferred number of music file per exercise period.

The device further includes a network interface for connecting to an exterior storage device storing the music files designated to the exercise periods, the music files stored in the exterior storage device being requested for the respective exercise periods.

The music designation unit also decides an exercise pattern of each exercise period and configures a designated condition on the basis of any of or a combination of at least two of the exercise pattern, the accumulated exercise amount and elapsed exercise time, and the biological information.

The device further includes a music file storage which stores the music files to be played back at the respective exercise periods; and a music file analysis unit which retrieves at least one music file satisfying the designated condition from the music file storage, wherein the control unit provides select music files from the music file storage and outputs a selected music file.

The device further includes a music file storage which stores the music files for playback at respective exercise periods; and a network interface for connecting to a music file analysis device which retrieves at least one music file satisfying the designation condition from the music file storage, wherein the control unit controls so as to request the music file satisfying the designation condition to the music file analysis device through the network interface and receive the music file to output.

Preferably, the exercise pattern is defined by a variation of the exercise amount in time and includes an abrupt increment, an increment, maintenance, a decrement, and an abrupt decrement.

The storage unit preferably includes a table having an exercise pattern identifier field, a target exercise amount field for storing accumulated exercise amount value, and an exercise amount list field for storing a list of exercise amount values for respective exercise patterns.

Preferably, the exercise amount list field contains information on a period identifier, exercise pattern, target exercise amount, exercise time, exercise distance, and designated music file.

The control unit selects the music file of which playback time is similar to the exercise period if more than one music file is designated to each exercise period.

The control unit also preferably resets the reference exercise schedule and the music file if the current exercise period does not end at the time the music file playback ends.

Preferably, the control unit resets the reference exercise schedule and the music file if an actually selected exercise pattern differs from the reference exercise pattern after the current exercise period ends.

Preferably, the control unit resets the reference exercise schedule and the music file if a value of the biological information is outside a predetermined tolerance range.

Preferably, the device further includes a music contribution information storage which stores information on influences of the music files contributed to an exercise achievement or a biological status of the user and on weight values of the music files calculated on the basis of the influences, wherein the music designation unit uses the weight value for selecting the music file.

Preferably, the music contribution information storage includes a table having a music file identifier field, a biological signal storage field, an exercise achievement rate field, a playback frequency field, and a weight value field.

Preferably, the control unit controls selects the music file having a highest weight value if more than one music file is designated to the exercise period.

The step of designating the music file also preferably includes deciding exercise patterns of the respective exercise periods; and configuring designated conditions for the exercise patterns.

The step of designating the music file includes deciding exercise patterns of the respective periods; and configuring designation condition of each exercise period on the basis of any of or a combination of at least two of the exercise pattern, the accumulated exercise amount and elapsed exercise time, and the biological information.

The step of outputting the guidance information and the music file in sound includes selecting the music file of which playback time is similar to the exercise period if more than one music file is designated to each exercise period.

Preferably, the step of resetting the reference exercise schedule and the music file includes determining whether the current exercise period ends at the time the music file playback ends; and changing the reference schedule and the music file to be played back if it is determined that the current exercise period does not end at the time the music file playback ends.

Preferably, the step of resetting the reference exercise schedule and the music file includes determines whether a difference between an exercise pattern taken by the user and the reference exercise pattern is outside a predetermined tolerance range; and changing the reference schedule and the music file to be played back if it is determined that the difference is outside the tolerance range.

Preferably, the step of resetting the reference exercise schedule and the music file includes determining whether a value of the biological information is outside a predetermined tolerance range; and changing the reference schedule and the music file to be played back if it is determined that the value of the biological information is outside the tolerance range.

Preferably, the method further includes the step of storing information on influences of the music files contributed to an exercise achievement or a biological status of the user and weight values of the music files calculated on the basis of the influences, the weight value being used for designating the music files to the respective reference exercise periods.

Preferably, the weight value is used for resetting the music files for the respective reference exercise periods.

Preferably, the step of outputting the guidance information and the music file in sound includes selecting the music file having a highest weight value if more than one music file is designated to the exercise period.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings;
FIG. 1 is a schematic diagram illustrating an exercise assistant system according to the present invention;
FIG. 2 is a perspective view of the exercise assistant device in FIG. 1;
FIG. 3 is a block diagram illustrating an exercise assistant device of exercise assistant system according to the present invention;
FIG. 4A and FIG. 4B are graphs illustrating exemplary exercise schedule built by the exercise schedule unit of FIG. 3;
FIG 5 is an exemplary view illustrating an exercise management database used in the exercise assistant system according to the present invention;
FIG. 6 is an exemplary view illustrating a music contribution information management DB used in the exercise assistant system according to the present invention;
FIG. 7 is a flowchart explaining an exercise pattern notification procedure of the exercise assistant system according to a first embodiment of the present invention;
FIG. 8A and FIG. 8B are flowcharts explaining the music file designation procedure of FIG. 7; and
FIG. 9 is a flowchart explaining an exercise pattern notification procedure of the exercise assistant system according to another embodiment of the present invention.

### DETAILED DESCRIPTION OF THE PREFERRED EMBODIMENTS

Preferred embodiments of the present invention will be described with reference to the accompanying drawings in detail. Where possible, the same reference numbers will be used throughout the drawing(s) to refer to the same or like parts. Detailed descriptions of well-known functions and structures incorporated herein will be omitted when it many obscure the subject matter of the present invention.

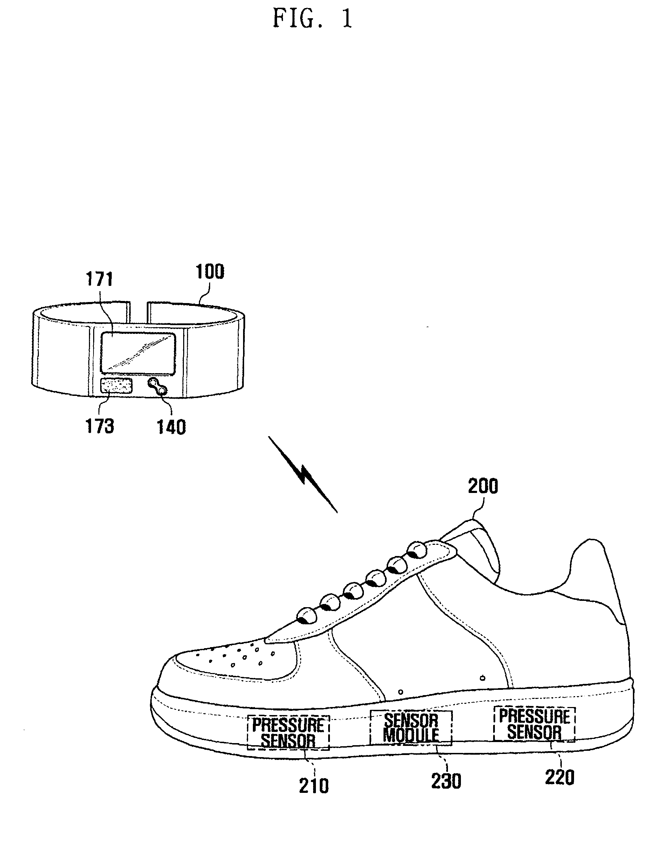

FIG. 1 is a schematic diagram illustrating an exercise assistant system according to the present invention. Referring to FIG. 1, the exercise assistant system according to an embodiment of the present invention includes a sensing unit 200 for sensing and measuring the exercise pattern and amount of the wearer and an exercise assistant device 100 which receives the information on the exercise pattern and amount from the sensing unit 200 and enables the wearer to manipulate the exercise assistant system. Both the exercise assistant device 100 and the sensing unit are wearable.

The exercise assistant device 100 includes a display 171, a speaker 173, and an interface 140.

The display 171 displays information on the current exercise related information on the wearer and the guidance information, e.g., a planned exercise pattern, a current exercise pattern, and a modified exercise pattern which is reset on the basis of the difference between the planned and current exercise patterns, preferably in a form of graph.

The speaker 173 notifies the wearer of the exercise related information and various instructions with sounds, i.e., predetermined voice outputs corresponding to the information to be notified.

The interface 140 is preferably provided in a form of button such that the wearer can manipulate the interface 140 to operate the exercise assistant system.

The exercise assistant system can store information that is personal to the user such as body dimension, target exercise, exercise pattern, constant bio-signals, and preference exercise pattern; and can set an exercise pattern that is proper to the wearer on the basis of the personal information.

The sensing unit 200 detects and measures the current exercise pattern and amount of the wearer. In this embodiment, the sensing unit 200 is implemented as a smart shoe.

As shown in FIG. 1, the sensing unit 200 in the form of shoe includes a plurality of pressure sensors 210 and 220 and a sensor module 230 at the bottom part of the shoe. The sensing unit 200 collects information on the pace and number of footsteps of the wearer through the pressure sensors 210 and 220 and then transmits the collected information to the exercise assistant device 100.

Although the sensing unit 200 is preferably implemented in the form of a shoe, it is not limited to a shoe, and can be implemented with various wearable articles.

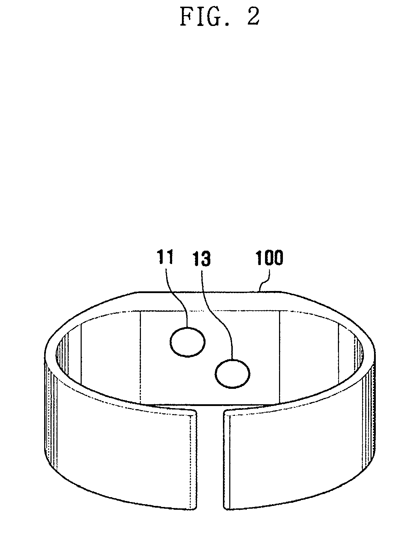

FIG. 2 is a perspective view of the exercise assistant device in FIG. 1. Referring to FIG. 2, the exercise assistant device 100 has a shape of a wristwatch or an armband and is provided with biosensors 11 and 13 on the surface contacting the body. The biosensors 11 and 13 detect various bio-signals such as a pulse rate. Accordingly, the exercise assistant system measures the wearer's biological condition with the information collected through the biosensors 11 and 13 and assists to adjust the exercise pattern and amount on the basis of the measured wearer's biological condition.

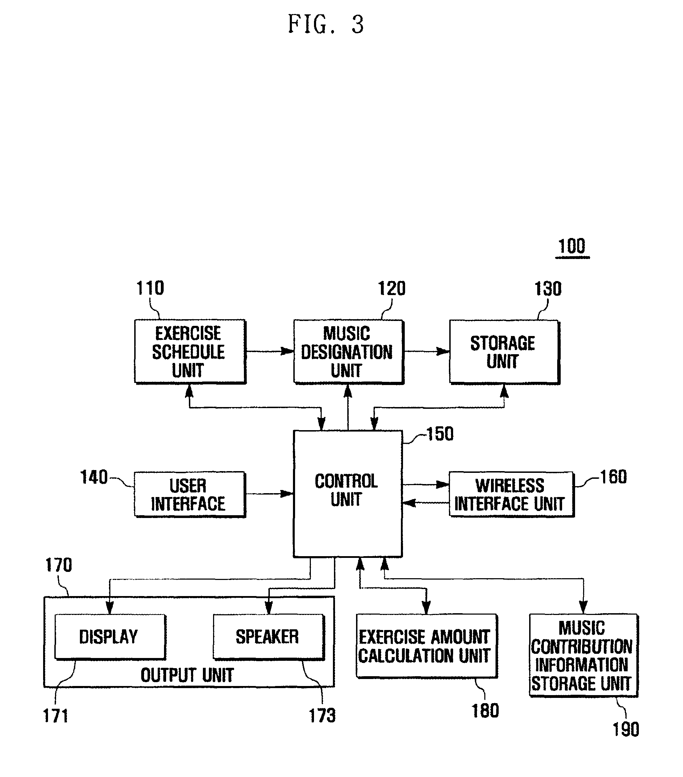

FIG. 3 is a block diagram illustrating an exercise assistant device of exercise assistant system according to the present invention. Referring to FIG. 3, the exercise assistant device 100 of the exercise assistant system according to an embodiment of the present invention includes an exercise schedule unit 110, a music designation unit 120, a storage unit 130, an user interface 140, a control unit 150, a wireless interface unit 160, an output unit 170, an exercise amount calculation unit 180, and a music contribution information storage unit 190.

The exercise schedule unit 110 builds an exercise diagram that is proper for the wearer on the basis of the user information such as the body dimension, target exercise, exercise pattern, constant bio-signal, and preferred exercise pattern. Preferably, the exercise schedule unit 110 divides the whole exercise time into several exercise periods and assigns different exercise patterns and amounts to the respective periods.

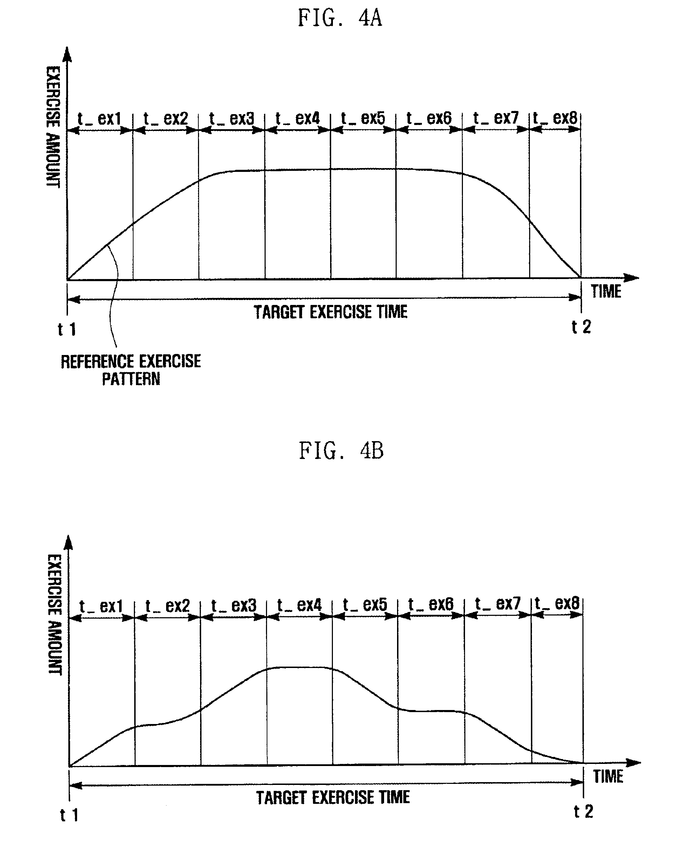

FIG. 4A and FIG. 4B are graphs illustrating exemplary exercise schedules built by the exercise schedule unit. FIG. 4A shows an exemplary exercise diagram in which an exercise pattern curve has a shape of an upside-downed washbowl and FIG. 4B is another exemplary exercise diagram in which the exercise pattern curve has a shape of a mountain having a shoulder.

Referring to FIG. 4A and FIG. 4B, the exercise schedule unit 110 sets a whole exercise time, divides the whole exercise time into a plurality of periods (for example 8 periods), and assigns appropriate exercise patterns to the respective periods, on the basis of the user information.

Referring to FIG. 3 again, the user information to be provided to the exercise schedule unit 110 is inputted through the user interface or is previously stored information. The body dimension information of the user includes height, weight, age, and gender of the user; the target exercise information includes target exercise amount, target exercise time, target distance, upper limit of the exercise amount, upper limit of the exercise time, upper limit of the distance; the exercise pattern information includes speed, footstep frequency, pace, and weight distribution; the constant biological signals includes pulse rate, body temperature, and blood pressure; and the preferred exercise pattern information includes a length of exercise period, a number of music files to be played, etc. The exercise plan (diagram) built by the exercise schedule unit 110 is transferred to the music designation unit 120.

The music designation unit 120 designates the music files to be played by period on the basis of the exercise diagram built by the exercise schedule unit 110. That is, the music designation unit 120 designates at least one music file to be played in the respective eight exercise periods depicted in FIG. 4A and FIG. 4B.

The designation of the music files can be carried out by the user manually or according to designated conditions preset for the exercise patterns in the respective exercise periods.

In case of direct designation, the music designation unit 120 receives the designation instruction through the user interface 140.

Meanwhile, in case of preset designated conditions the music designation unit 120 checks the exercise pattern (for example, an abrupt increment, an increment, a maintenance, a decrement, an abrupt decrement) in the respective periods and designates music files selected on the basis of designated conditions such as genre, mood, and tempo.

The music designation unit 120 can determine the exercise patterns of the respective exercise periods and set, as the music file designation conditions, at least one of the exercise patterns, exercise amount accumulated before the current period, exercise time elapsed before the present period, and the current bio-signals. When the exercise pattern of the at least two periods are identical, the designated condition can be changed by the difference of elapsed times. Accordingly, it enables the user to listen to varied music files.

In the example shown in FIG. 4B, the first and third exercise periods (t_ex1 and t_ex3) show the same exercise pattern, and the fifth and seventh exercise periods (t_ex5 and t_ex7) show the same exercise pattern. However, the first and third exercise periods (t_ex1 and t_ex3), as well as the fifth and seventh exercise periods (t_ex5 and t_ex7), differ from each other in time. Accordingly, the biological signals as well as the excise levels and accumulated exercise amounts in the respective excise periods differ from each other. Results from these differences, when the designation conditions are set with one exercise pattern, the accumulated exercise amount, the elapsed exercise time, and the biological signals, the different designated conditions are set for the first and third exercise periods and the fifth and seventh periods.

For these reasons, the user can actually listen to different music files in the initial exercise step of warming up and an intermediate exercise step, despite having an identical exercise pattern. The exercise patterns indicate the variations of the exercise amount according to the elapse of time and include the sudden rise, rise, maintain, fall, and sudden fall. In the example of FIG. 4A, the first and second exercise periods (t_ex1 and t_ex2) show the same exercise pattern of sudden rise, the third exercise period (t_ex3) shows the rise, the fourth to sixth exercise periods (t_ex4, t_ex5, t_ex6) show the maintain, the seventh exercise period (t_ex7) shows the fall, and the eighth exercise period (t_ex8) shows sudden fall. Accordingly, the music designation unit 120 can detect the variation of the exercise amount and designate the conditions for selecting the music files according to the exercise amount variation.

The storage unit 130 stores the information on the exercise plan built by the exercise schedule unit 110 and information on the music files designated by the music designation unit 120 in association with the respective exercise periods.

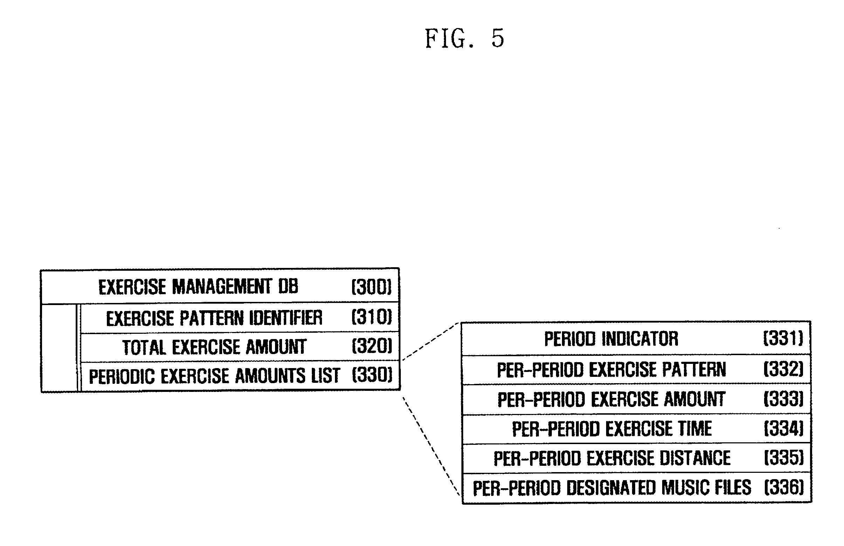

The information on the exercise plans and the music files to be played back at the respective exercise periods are stored in the form of a database (DB) 300 as shown in FIG. 5. Referring to FIG. 5, the exercise management DB 300 includes an exercise pattern identifier 310, a total exercise amount 320, a periodic exercise amounts list 330. The periodic exercise amounts list 330 includes a period indicator 331, a per-period exercise pattern 332, a per-period exercise amount 333, a per-period exercise time 334, a per-period exercise distance 335, and per-period designated music files 336.

The user interface 140 enables the user to input commands for manipulating the exercise assistant device 100 and is implemented with button(s).

The control unit 150 controls the operations of the exercise assistant device 100 according the user's input command and the predetermined control algorithm. For example, the control unit 100 controls the exercise schedule unit 110 to build the exercise diagram and the music designation unit 120 to designate music files appropriate to the respective exercise periods, on the basis of the user commands inputted through the user interface 140.

Also, the control unit 150 collects data on the movement of the user through a movement or (not shown) or the wireless interface unit 160, checks the music files designated for the current exercise period, and plays back the music files designated to the current exercise period through the speaker 173.

If the music files are stored in the exercise assistant device 100, the control unit 150 retrieves the music files from a music storage (not shown). Otherwise, the control unit 150 can download the corresponding music files from a predetermined device or website through the wireless interface unit 160.

When a plurality of music files are designated to one exercise period, the control unit 150 can select in a sequential order or selectively playback a music file which fits the length of the exercise period.

Also, the control unit 150 notifies the user of the exercise related information and guidance information through the display 171 and/or the speaker 173 on the basis of the exercise pattern information for the current period.

The wireless interface unit 160 allows for communication through a wireless communication network, for example allowing the exercise assistant device 100 to support a wireless communication function with various mobile communication services.

Also, the control unit 150, via the wireless interface unit 160, transmits designation conditions prepared by the music designation unit 120 to a music analyzer (for example, a DCM engine) and receives a corresponding retrieved music files list from the music analyzer. Here, the music analyzer can be integrated into the exercise assistant device 100 or can be a network element associated with the exercise assistant device 100.

The wireless interface unit 160 receives the data such as the number of footsteps and pace detected by the sensing unit 200 and transfers the detected data to the control unit 150. If the data detected by the sensing unit 200 are received, the control unit 150 provides the data to the exercise amount calculation unit 180 so as to obtain the exercise amount and current exercise pattern on the basis of the detected data.

The output unit 170 outputs the exercise related and guidance information and the music files designated to the current exercise period. Preferably, the output unit 170 includes the display 171 and the speaker 173.

The display 171 shows the exercise related and guidance information to the user. For example, the display unit 171 displays the current exercise pattern and the planned exercise pattern so as to inform the user of the difference between the current exercise pattern and the planned exercise pattern. Also, the display 171 can show a modified exercise pattern which is reset on the basis of the difference between the current exercise pattern and the planned exercise pattern in a form of graph.

The speaker 173 outputs the exercise related and guidance information to the user with sounds, especially in prerecorded voice messages. Also, the speaker outputs the sound of the music file(s) designated to the current exercise period under the control of the control unit 150.

The exercise amount calculation unit 180 calculates the user's current exercise amount and level under the control of the control unit 150. That is, the exercise amount calculation unit 180 calculates the exercise amount and the exercise pattern of the user on the basis of the data such as the number of the footsteps and pace received through the wireless interface unit 160. For example, when the user is jogging, the exercise amount calculation unit 180 measures the number of footsteps per exercise period and variation of the per-period footsteps and calculates the exercise amount, exercise pattern, exercise time, and exercise distance on the basis of the measurements. The calculated values are transferred to the control unit 150, to be provided to the user through the output unit 170.

The music contribution information storage unit 190 stores the information on the influences of the music files which effected to the results of the exercise or the physical status of the user.

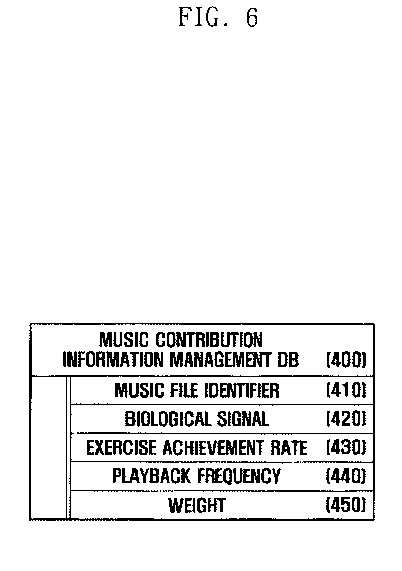

The influence information is stored in the form of a database (DB) 400 as shown in FIG. 6. Referring to FIG. 6, the music contribution information management DB 400 includes a music file identifier 410, a biological signal 420, an exercise achievement rate 430, a playback frequency 440, and a weight 450.

Preferably, the music contribution information storage unit 190 receives the music file identifier of the currently playing music, the exercise achievement rate in the exercise period while the music file is played, the playback frequency, and the weight value estimated on the basis of the above information from the control unit 150. The weight value is required for determining whether to select the corresponding music file and preferably consists of non-playback, a first playback step, a second playback step, and third playback step.

The stored weight values are referred, by the music designation unit 120, for designating music files to respective exercise periods.

In the meantime, the control unit 150 adjusts the planned exercise pattern on the basis of the exercise related information and the variation of the user's biological signals. That is, the control unit 150 compares the reference exercise pattern stored in the storage unit 130 and the current exercise pattern information calculated by the exercise amount calculation unit 180 and adjusts the planned exercise pattern by controlling the exercise schedule unit 110 and the music designation unit 120 if the difference between the reference exercise pattern and the current exercise pattern is greater than a predetermined threshold value.

Even when the difference between the reference exercise pattern and the current exercise pattern is negligible, the control unit 150 can adjust the reference exercise pattern when it is determined that the user's biological signals show that the user's physical status is approaching a dangerous condition. That is, when the user's biological signals change abruptly or reach dangerous levels, the control unit 150 notifies the user to quit the exercise. In order to decide the dangerous status, the control unit 150 stores the dangerous biological signal variation values and danger indication values of the respective biological signals so as to adjust the exercise pattern when the biological signal variation and the danger indication values shows a dangerous present status. Preferably, the biological signals of the user are received through the wireless interface unit 160. Preferably, the exercise assistant device 100 is provided with additional biosensors (for example, 11 and 13 of FIG. 2) and receives the biological signal from biosensors 11 and 13.

According to the adjustment of the exercise pattern, the music files to be played at the respective exercise periods are changed and the adjusted exercise pattern and the information on the changed music files are stored in the storage unit 130.

Even when the user's planned exercise (e.g., the reserved exercise amount, distance, and time) is not changed, the music files to be played at the respective exercise periods can be changed according to the change of the user's current exercise pattern. This prevents the user from becoming bored when exercising even when the same exercise is repeated. When the designation conditions are set by the exercise pattern, the reference exercise pattern can provide notification by playing certain music files.

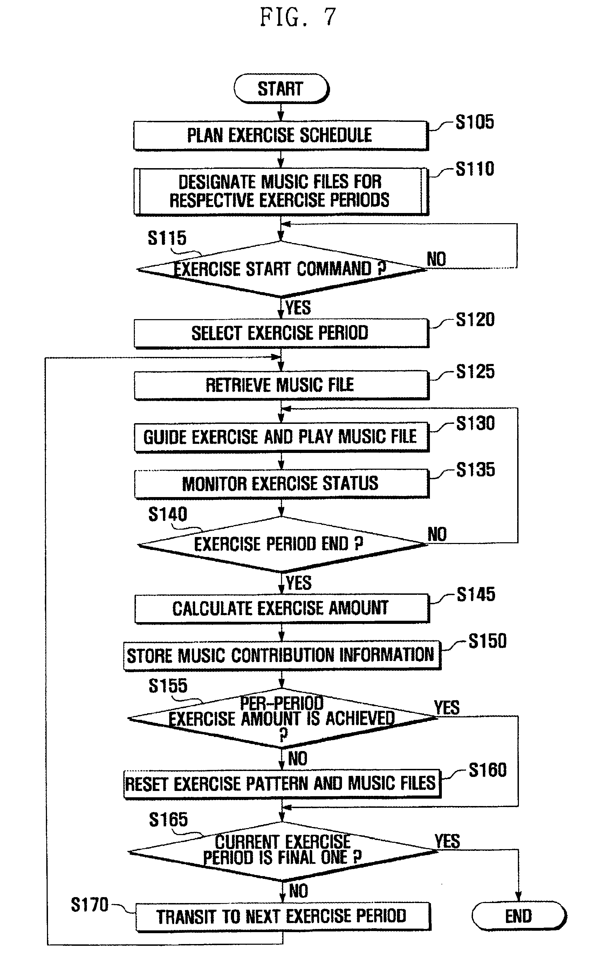

FIG. 7 is a flowchart explaining an exercise pattern notification procedure of the exercise assistant system according to an embodiment of the present invention. Referring to FIG. 3 and FIG. 7, , the exercise schedule unit 110 plans an exercise pattern under the control of the control unit 150 at step S105. Here, the planned exercise pattern is called 'reference exercise pattern'. In order to plan the reference exercise pattern, the exercise schedule unit 110 uses the user information such as the body dimension, target exercise, exercise pattern, constant biological signals, and preference exercise pattern. That is, the exercise schedule unit 110 divides the total exercise time into several exercise periods and determines the exercise patterns and times for the respective exercise periods. Examples of the planned exercise are shown as graphs in FIG. 4A and FIG. 4B.

Once the exercise patterns of the exercise periods are planned, the music designation unit 120 designates the music files appropriate to the respective exercise periods on the basis of the planned exercise patterns at step S110. The music files can be selected directly or according to the designation conditions set by the exercise pattern. The music file selection procedures are explained in more detail with reference to FIG. 4A and FIG. 4B.

After the music files are selected for the respective exercise periods, the exercise assistant device 100 determines whether there is an exercise start command inputted by the user at step S 115. The exercise start command can be sensed by an exercise recognition sensor (not shown). For example, the control unit 150 determines that the exercise start command is inputted when an exercise pattern and amount measured by the exercise recognition sensor is received.

Once the exercise start command is inputted, the control unit 150 selects the corresponding exercise period from the storage unit 130 at step S120. The control unit 150 selects the exercise pattern intended by the user from the exercise pattern management DB 300 shown in FIG. 5 and then selects the current exercise period from the periodic exercise amount list 330.

The control unit 150 retrieves the music file designated for the current exercise period at step S125 and guides the exercise while playing the selected music file at step S130. In case of direct music file designation, the control unit 150 selects the designated music file. In case of music file designation with the designation conditions (for example, genre, mood, and tempo), however, the control unit 150 retrieves the music file satisfying the designation conditions. Preferably, the music file retrieval can be performed by a music analyzer (for example, DCM engine). The music analyzer can be integrated with the exercise assistant device 100 or a network element electrically associated with the exercise assistant device 100. When more than one music files are retrieved by the music analyzer, the control unit 150 can select the music file of the current exercise period in consideration of weight values of the retrieved music files, as previously analyzed and stored. The weight value is decided on the basis of the playback history of each music file such that it is calculated with the biological signals and exercise achievement rate during the playback of the music file and the playback frequency of the music file.

If more than one music file is designated for a single exercise period or retrieved in accordance with the designation conditions, the control unit 150 controls selects the music file having greater weight value. Also, the control unit 150 can control the playback to play the selected music files in a sequential order or by music file fit for the length of the exercise period.

In order to guide the exercise, the control unit 150 can control the display unit 171 to display the guidance message or the exercise pattern graph, the speaker to output the guidance message in voice or melody, or a vibration unit (not shown) to vibrate.

While monitoring the exercise status of the user at step S 135, the control unit 150 determines whether the current exercise period ends at step S140. If it is determined that the current exercise period is not ended, the control unit 150 goes back to perform the step S130. The exercise status of the user can be monitored using the various sensors worn by the user. For example, the exercise amount and level can be analyzed on the basis of the data collected by the smart shoe equipped with the pressure sensors and the geomagnetic sensors and the variations of the user's biological signals can be monitored by another biological signal sensors.

If the current exercise period is ended, the exercise amount calculation unit 180 calculates the exercise amount and level currently achieved by the user and accumulates the calculated exercise amount and records the exercise pattern in the current exercise period at step S 145.

In order to inform the user of the actual exercise pattern, the notification of currently calculated exercise pattern and amount can be provided through the output unit 170. If the exercise period ends before the end of the music file, it is preferred that the music file keeps playing in the next exercise period.

After the calculation of the exercise amount and level is completed, the control unit 150 stores the information on the effects of the music file on the exercise at step S150. That is, the control unit 150 analyzes and stores the effects of the music file contributed to the exercise achievement rate and the physical status of the user. In order to analyze the contribution effect of the music file, it is preferred that the control unit 150 stores the weight value of the music file that are calculated using the identifier of the currently playing music file, user's biological signals while the music file is played, the exercise achievement during the period, the playback frequency of the music file.

On the basis of the exercise amount information calculated at step S 145, the control unit determines whether the target period exercise amount is achieved at step S155. That is, the control unit 150 calculates the difference between the target exercise amount and the actual excise amount and determines that the target period exercise amount is achieved if the difference is in a tolerance range. Otherwise, the control unit 150 determines that the target period exercise amount is not achieved.

If it is determined that the target period exercise amount is not achieved, the control unit 150 resets the exercise pattern and music files to be played at step S 160. That is, the control unit 150 modifies the preset reference exercise pattern and the music files for the exercise periods associated with the reference exercise pattern. Preferably, the control unit 150 uses the contribution effect (weight value) of the music file.

If the biological signals of the user show variation indicating a dangerous level, the control unit 150 determines that the target period exercise amount is not achieved even when the target period exercise amount is actually achieved. Also, the control signals guides the user to quit the exercise before the exercise is completed if the user's biological signals are significantly unstable.

The control unit 150 determines whether the current exercise period is the final exercise period at step S165 and transits to the next exercise period at step S170 so as to repeat the steps of S 125 to S 160 if the current exercise period is not the final exercise period.

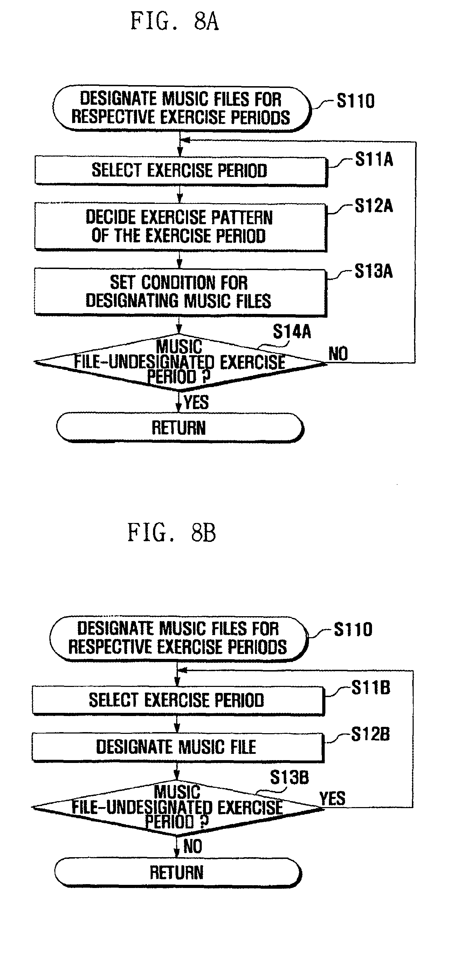

FIG. 8A and FIG. 8B are flowcharts for explaining the music file designation procedure of FIG. 7. FIG. 8A shows the music file designation procedure with the designation conditions per exercise pattern and FIG. 8B shows the music file designation procedure for directly designating the music files to the respective exercise periods.

Referring to FIG. 3 and FIG. 8A, the control unit 150 selects an exercise period at step S 11A and then checks the exercise amount variation in the exercise period at step S12A. That is, the control unit 150 determines whether the exercise amount increases abruptly or gradually, maintains horizontally, or decreases gradually or abruptly.

Next, the control unit 150 sets the designated conditions for the respective exercise patterns at step S13A. For example, the control unit 150 designates the music files of speedy tempo for the abrupt increment pattern and the music files of very slow tempo for the abrupt decrement pattern. The designated conditions include the genre, mood, tempo, etc.

The designated conditions can be decided on any of the exercise amount and time accumulated until the previous exercise period and the current user's biological signals as well as the exercise pattern, or a combination of at least two of those. Accordingly, different music files can be designated for the exercise periods having an identical exercise pattern in consideration with the elapsed time.

In the meantime, the control unit 150 repeatedly performs steps S11A to S13A until all the exercise periods are designated with corresponding music files.

Referring to FIG. 3 and FIG. 8B, the control unit 150 selects an exercise period at step S11B and then designates a specific music file to the selected exercise period at step S12B. The control unit 150 repeatedly performs steps S11B and S12B until all the exercise periods are designed with corresponding music files.

In the examples of FIG. 8A and FIG. 8B, the exercise periods to designate the music files are selected in a randomly selected order, however, the exercise periods can be selected in a sequential order.

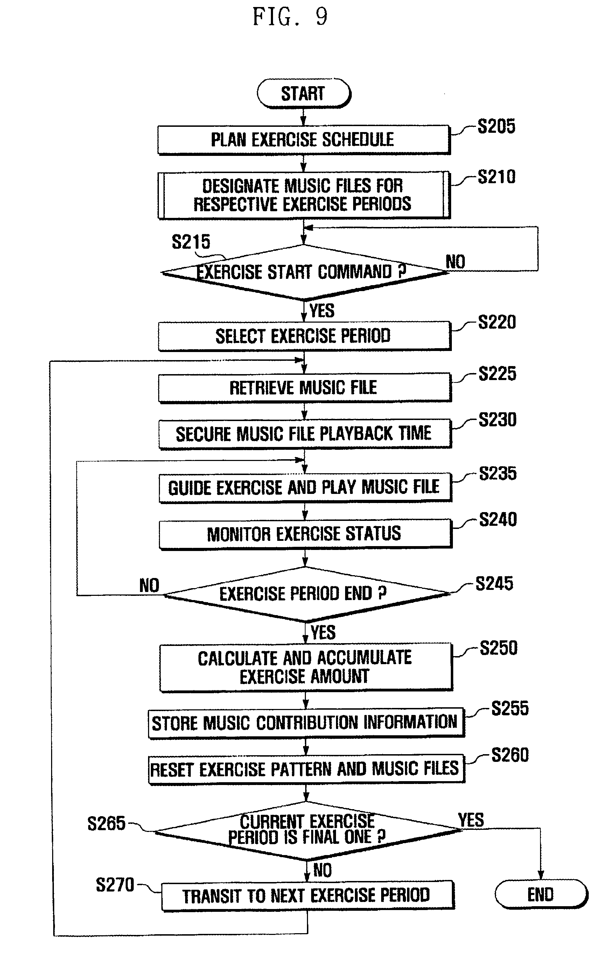

FIG. 9 is a flowchart for explaining an exercise pattern notification procedure of the exercise assistant system according to another embodiment of the present invention. Referring to FIG. 3 and FIG. 9, firstly, the exercise schedule unit 110 plans an exercise pattern under the control of the control unit 150 at step S205. Here, the planned exercise pattern is called 'reference exercise pattern'. In order to plan the reference exercise pattern, the exercise schedule unit 110 uses the user information such as the body dimension, target exercise, exercise pattern, constant biological signals, and preference exercise pattern. That is the exercise schedule unit 110 divides the total exercise time into several exercise periods and determines the exercise patterns and times for the respective periods. An example of the planned exercise is shown as graphs in FIG. 4A or FIG. 4B.

Once the exercise patterns of the exercise periods are planned, the music designation unit 120 designates the music files appropriate to the respective exercise periods on the basis of the planned exercise patterns at step 210. The music files can be selected directly or according to the designated conditions set by the exercise pattern. The music file selection procedures have been explained above with reference to FIG. 8A and FIG. 8B.

After the music files are selected for the respective exercise periods, the exercise assistant device 100 determines whether there is an exercise start command inputted by the user at step S215. The exercise start command can be sensed by an exercise recognition sensor (not shown). For example, the control unit 150 determines that the exercise start command in inputted when an exercise pattern and amount measured by the exercise recognition sensor is received.

Once the exercise start command is inputted, the control unit 150 selects the corresponding exercise period from the storage unit 130 at step S220. The control unit 150 selects the exercise pattern intended by the user from the exercise pattern management DB 300 shown in FIG. 5 and then selects the current exercise period from the periodic exercise amount list 330. Next, the control unit 150 retrieves the music file designated for the current exercise period at step S225 so as to secure the playback time of the retrieved music file at step S230 for maintaining the exercise pattern of the current exercise period during the playback of the retrieved music file.

When the music file is directly designated to the current exercise period, the control unit 150 selects the designated music file. On the other hand, when the music file designation is provided with the designation conditions (for example, genre, mode, and tempo), the control unit retrieves the music files satisfying the designation conditions. Preferably, the music file retrieval can be performed by a music analyzer (for example, DCM engine). The music analyzer can be integrated with the exercise assistant device 100 or a network element electrically associated to the exercise assistant device. When more than one music file is retrieved by the music analyzer, the control unit 150 selects one of the retrieved music files on the basis of the weight value. The weight value is decided on the basis of the playback history of each music file such that it is calculated with the biological signals and exercise achievement rate during the playback of the music file and the playback frequency of the music file.

If more than one music file is designated for a single exercise period or retrieved in accordance with the designation conditions, the control unit 150 selects the music file having greater weight value. Also, the control unit 150 can control playback of the selected music files in a sequential order by music file fit with the length of the exercise period.

The control unit 150 guides the exercise while playing the selected music file at step S235. In order to guide the exercise, the control unit 150 can control the display unit 171 to display the guidance message or the exercise pattern graph, the speaker to output the guidance message in voice or melody, or a vibration unit (not shown) to vibrate.

While monitoring the exercise status of the user at step S240, the control unit 150 determines whether the playback of the music file ends at step S245. The exercise status of the user can be monitored using the various sensors worn by the user. For example, the exercise amount and level can be analyzed on the basis of the data collected by the smart shoe equipped with the pressure sensors and the geomagnetic sensors and variation of the user's biological signals, which can be monitored by other biological signal sensors.

If it is determined that playback of the music file is ends at step S245, the exercise amount calculation unit 180 calculates the exercise amount and level achieved by the user and accumulates the calculated exercise amount and records the exercise pattern in the current exercise period at step S250.

In order to inform the user of the actual exercise pattern, notification of the currently calculated exercise pattern and amount can be provided through the output unit 170. If the exercise period ends before the end of the music file, it is preferred that the music file keeps playing in the next exercise period.

After the calculation of the exercise amount and level is completed, the control unit 150 stores the information on the effects of the music file on the exercise at step S255. That is, the control unit 150 analyzes and stores the effects of the music file contributed to the exercise achievement rate and the physical status of the user. In order to analyze the contribution effect of the music file, it is preferred that the control unit 150 stores the weight value of the music file that is calculated using the identifier of the currently playing music file, user's biological signals while the music file is played, the exercise achievement during the period, the playback frequency of the music file.

After storing the information on the contribution effects of the music file, the control unit 150 resets the exercise pattern and music files to be played at step S260. That is, the control unit 150 modifies the preset reference exercise pattern and the music files for the exercise periods in association with the reference exercise pattern. Preferably, the control unit 150 uses the contribution effect (weight value) of the music file.

Sequentially, the control unit 150 determines whether the current exercise period is the final exercise period at step S265 and transits to the next exercise period at step S270 so as to repeat the steps of S225 to S265 if the current exercise period is not the final exercise period.

Although preferred embodiments of the present invention have been described in detail hereinabove, it should be understood that further variations and/or modifications of the basic inventive concepts taught herein which may be apparent to those skilled in the present art that will still fall within the scope of the present invention, as defined in the appended claims.

As described above, since the exercise assistant system and method of the present invention enables adjustment of the exercise amount and level according to the user's exercise achievement and physical variation during the exercise, it is possible to effectively assist the user's exercise. That is, the exercise assistant system can automatically adjust the exercise amount and level to as to be appropriate for the user on the basis of the body dimension of the user and the data collected by the biosensors in real-time, it is possible to prevent the user from doing excessive exercise.

Also, the exercise assistant system of the present invention supports automatic music file selection function such that the music files are selected according to the exercise patterns at the respective exercise period, resulting in excitement of the user.

Also, in the exercise assistant system, the music files are selected by the music analyzer on the basis of the predetermined designated conditions such that it is possible for the user to enjoy the music in various sequences.

Furthermore, the exercise assistant system of the present invention guides the user to do the exercise that adapts the user's real time physical status with music appropriate to the physical status, making it possible to improve the user's excitement and protect from accidents caused by the excessive exercise.

## Claims

1. An exercise assistant device comprising:
an exercise schedule unit (110) which builds a reference exercise schedule on the basis of user information, wherein the exercise schedule includes a predetermined number of exercise periods divided in time, with each exercise period being featured by a reference exercise pattern;
a music designation unit (120) which designates at least one music file for the reference exercise schedule, wherein the music designation unit checks an exercise pattern of each exercise period and configures a designated condition in accordance with the exercise pattern;
a storage unit (130) which stores the reference exercise schedule and the music file designated for the reference exercise schedule;
a control unit (150) which retrieves the reference exercise schedule and the music file designated for the reference exercise schedule, generates guidance information for retrieval of the music file corresponding to the reference exercise schedule, and resets the reference exercise schedule and re-designates the music file on the basis of an actual exercise pattern and a biological change of a user while exercising in accordance with the reference exercise schedule;
a speaker (173) which outputs the guidance information and the music file; and
a display unit (171) which displays a reference exercise pattern and an actual exercise pattern.

2. The device of claim 1, wherein the user information includes:
body dimension information such as height, weight, age, and gender;
target exercise information such as target exercise amount, target exercise time, target distance, maximum exercise amount, and maximum movement distance;
exercise amount information such as accumulated exercise amount, elapsed exercise time, and accumulated movement distance;
exercise strength information such as speed, footstep frequency, pace, and weight distribution;
biological information such as pulse rate, body temperature, and blood pressure; and
preference information such as preferred exercise period size, a preferred number of music files per exercise period.

3. The device of claim 1, wherein the music designation unit (120) directly designates at least one music file to each exercise period.

4. The device of claim 3 further comprising a music file storage unit which stores the music files to be played back at respective exercise periods.

5. The device of claim 3 further comprising a network interface (140) for connecting to an external storage device storing the music files designated to the exercise periods, the music files stored in the external storage device being requested for respective exercise periods.

6. The device of claim 1, wherein music designation unit (120) decides an exercise pattern of each exercise period and configures a designated condition on the basis of at least two of the actual exercise pattern, an accumulated exercise amount and elapsed exercise time, and biological information.

7. The device of claim 1 further comprising:
a music file storage which stores the music files for play back at respective exercise periods; and
a music file analysis unit which retrieves at least one music file satisfying the designated condition ,
wherein the control unit (150) controls selection of the music file from the music file storage and output of the selected music file.

8. The device of claim 1 further comprising:
a music file storage which stores the music files for play back at respective exercise periods; and
a network interface for connecting to a music file analysis device which retrieves at least one music file satisfying the designated condition,
wherein the control unit (150) controls request of the music file satisfying the designated condition to a music file analysis device through the network interface for receipt of the music file to be output.

9. The device of claim 1, wherein the exercise pattern is defined by a variation of exercise amount over time and includes an abrupt increment, an increment, a maintenance, a decrement, and an abrupt decrement.

10. The device of claim 1, wherein the storage unit (130) includes a table having an exercise pattern identifier field, a target exercise amount field for storing accumulated exercise amount value, and an exercise amount list field for storing a list of exercise amount values for respective exercise patterns.

11. The device of claim 10, wherein the exercise amount list field contains information on a period identifier, exercise pattern, target exercise amount, exercise time, exercise distance, and designated music file.

12. The device of claim 1, wherein the control unit (150) selects the music file of which playback time is similar to an exercise period time if more than one music file is designated to an exercise period.

13. The device of claim 1, wherein the control unit (150) controls play of music files in a sequential order if more than one music file is designated to an exercise period.

14. The device of claim 1, wherein the control unit (150) resets the reference exercise schedule and the music file if the current exercise period is not ended when music file playback ends.

15. The device of claim 1, wherein the control unit (150) resets the reference exercise schedule and the music file if an actually taken exercise pattern differs from the reference exercise pattern after the current exercise period ends.

16. The device of claim 1, wherein the control unit (150) resets the reference exercise schedule and the music file if user biological information is outside a predetermined tolerance range.

17. The device of claim 1 further comprising a music contribution information storage (190) which stores information on influences of the music files contributed to an exercise achievement or a biological status of the user and weight values of the music files calculated on the basis of the influences, wherein the music designation unit uses the weight value for selecting the music file.

18. The device of claim 17, wherein the music contribution information storage includes a table having a music file identifier field, a biological signal storage field, an exercise achievement rate field, a playback frequency field, and a weight value field.

19. The device of claim 18, wherein the control unit (150) controls selection of the music file having a highest weight value if more than one music file is designated to an exercise period.

20. A method for managing an exercise assistant device comprising:
building a reference exercise schedule based on user information;
dividing the reference exercise schedule into a predetermined number of exercise periods;
deciding exercise patterns and times of the respective exercise periods
designating at least one music file including assigning at least one unique music file to each exercise period;
storing the reference exercise schedule and the music file;
outputting guidance information and audibly outputting the music file based on the reference exercise schedule;
displaying a reference exercise pattern and an actual exercise pattern; and
resetting the reference exercise schedule and the music file on the basis of a biological change of the user during exercise.

21. The method of claim 20, wherein user information includes: body dimension information such as height, weight, age, and gender; target exercise information such as target exercise amount, target exercise time, target distance, maximum exercise amount, and maximum movement distance; exercise amount information such as accumulated exercise amount, elapsed exercise time, and accumulated movement distance; exercise strength information such as speed, footstep frequency, pace, weight distribution; biological information such as pulse rate, body temperature, and blood pressure; and preference information such as preferred exercise period, duration and a preferred number of music files per exercise period.

22. The method of claim 20, wherein the step of designating at least one music file includes:
deciding exercise patterns for the respective exercise periods; and
configuring designated conditions for the exercise patterns.

23. The method of claim 20, wherein the step of designating at least one music file includes:
deciding exercise patterns for the respective periods;
configuring designated conditions of each exercise period on the basis of any of or a combination of at least two exercise patterns, the accumulated exercise amount and elapsed exercise time, and biological information.

24. The method of claim 22, wherein the exercise patterns are defined by a variation of exercise amount over time, and includes an abrupt increment, an increment, a maintenance, a decrement, and an abrupt decrement.

25. The method of claim 20, wherein the step of outputting guidance information includes selecting a music file having playback time similar to the exercise period if more than one music file is designated to each exercise period.

26. The method of claim 20, wherein the step of outputting guidance information includes playing back music files in a sequential order if more than one music file is designated to each exercise period.

27. The method of claim 20, wherein the step of resetting the reference exercise schedule and the music file includes:
determining whether the current exercise period ends when the music file playback ends; and
changing the reference exercise schedule and the music file to be played back if it is determined that the current exercise period is not end when the music file playback ends.

28. The method of claim 20, wherein the step of resetting the reference exercise schedule and the music file includes:
determining whether a difference between a user selected exercise pattern and the reference exercise pattern is outside a predetermined tolerance range; and
changing the reference exercise schedule and the music file to be played back if it is determined that the difference is outside the tolerance range.

29. The method of claim 20, wherein the step of resetting the reference exercise schedule and the music file includes:
determining whether a value of the biological change is outside a predetermined tolerance range; and
changing the reference exercise schedule and the music file to be played back if it is determined that the value of the biological change is outside the tolerance range.

30. The method of claim 20 further comprising storing information on influences of music files contribution to an exercise achievement or a biological status of the user and weight values of the music files calculated on the basis of the influences, the weight value being used for designating music files to the respective reference exercise periods.

31. The method of claim 30, wherein the weight value is used for resetting the music files for respective reference exercise periods.

32. The method of claim 30, wherein the step of outputting the guidance information includes selecting the music file having a highest weight value if more than one music file is designated to the exercise period.

## Patentansprüche

1. Trainings-Unterstützungsvorrichtung, die umfasst:
eine Trainingsplan-Einheit (110), die einen Bezugs-Trainingsplan auf Basis von Benutzerinformationen erstellt, wobei der Trainingsplan eine vorgegebene Anzahl von Trainingsperioden enthält, die zeitlich unterteilt sind, und jede Trainingsperiode durch ein Bezugs-Trainingsmuster **gekennzeichnet** ist;
eine Musikbestimmungseinheit (120), die wenigstens eine Musikdatei für den Bezugs-Trainingsplan bestimmt, wobei die Musikbestimmungseinheit ein Trainingsmuster jeder Trainingsperiode prüft und eine angegebene Bedingung entsprechend dem Trainingsmuster konfiguriert;
eine Speichereinheit (130), die den Bezugs-Trainingsplan und die für den Bezugs-Trainingsplan bestimmte Musikdatei speichert;
eine Steuer-Einheit (150), die den Bezugs-Trainingsplan und die für den Bezugs-Trainingsplan bestimmte Musikdatei abruft, Leitinformationen für das Auffinden der Musikdatei entsprechend dem Bezugs-Trainingsplan erzeugt und den Bezugs-Trainingsplan zurücksetzt und die Musikdatei auf Basis eines tatsächlichen Trainingsmusters sowie einer biologischen Änderung eines Benutzers während des Trainings entsprechend dem Bezugs-Trainingsplan neu bestimmt;
einen Lautsprecher (173), der die Leitinformationen und die Musikdatei ausgibt; und
eine Anzeigeeinheit (171), die ein Bezugs-Trainingsmuster und ein tatsächliches Trainingsmuster anzeigt.

2. Vorrichtung nach Anspruch 1, wobei die Benutzerinformationen einschließen:
Körpermaßinformationen, wie beispielsweise Größe, Gewicht, Alter und Geschlecht;
Ziel-Trainingsinformationen, wie beispielsweise Ziel-Trainingsmaß, Ziel-Trainingszeit, Zielstrecke, maximales Trainingsmaß und maximale Bewegungsstrecke;
Trainingsmaß-Informationen, wie beispielsweise akkumuliertes Trainingsmaß, abgelaufene Trainingszeit und akkumulierte Bewegungsstrecke;
Trainingsstärke-Informationen, wie beispielsweise Geschwindigkeit, Schrittfrequenz, Tempo und Gewichtsverteilung;
biologische Informationen, wie beispielsweise Pulsschlag, Körpertemperatur und Blutdruck; und
Präferenz-Informationen, wie beispielsweise bevorzugte Trainingsperiodenlänge und eine bevorzugte Anzahl von Musikdateien pro Trainingsperiode.

3. Vorrichtung nach Anspruch 1, wobei die Musikbestimmungseinheit (120) direkt wenigstens eine Musikdatei für jede Trainingsperiode bestimmt.

4. Vorrichtung nach Anspruch 3, die des Weiteren eine Musikdatei-Speichereinheit umfasst, die die Musikdateien speichert, die bei jeweiligen Trainingsperioden abgespielt werden sollen.

5. Vorrichtung nach Anspruch 3, die des Weiteren eine Netzwerk-Schnittstelle (140) zum Verbinden mit einer externen Speichervorrichtung umfasst, die die für die Trainingsperioden bestimmten Musikdateien speichert, wobei die in der externen Speichervorrichtung gespeicherten Musikdateien für jeweilige Trainingsperioden angefordert werden.

6. Vorrichtung nach Anspruch 1, wobei die Musikbestimmungseinheit (120) über ein Trainingsmuster jeder Trainingsperiode entscheidet und eine bestimmte Bedingung auf Basis von wenigstens zwei der tatsächlichen Trainingsmuster, eines akkumulierten Trainingsmaßes und einer verstrichenen Trainingszeit sowie biologischer Informationen konfiguriert.

7. Vorrichtung nach Anspruch 1, die des Weiteren umfasst:
einen Musikdatei-Speicher, der die Musikdateien zum Abspielen in jeweiligen Trainingsperioden speichert; und
eine Musikdatei-Analyseeinheit, die wenigstens eine Musikdatei auffindet, die die bestimmte Bedingung erfüllt,
wobei die Steuereinheit (150) Auswahl der Musikdatei aus dem Musikdatei-Speicher und Ausgabe der ausgewählten Musikdatei steuert.

8. Vorrichtung nach Anspruch 1, die des Weiteren umfasst:
einen Musikdatei-Speicher, der die Musikdateien zur Wiedergabe in jeweiligen Trainingsperioden speichert; und
eine Netzwerk-Schnittstelle zur Verbindung mit einer Musikdatei-Analysevorrichtung, die wenigstens eine Musikdatei auffindet, die die bestimmte Bedingung erfüllt,
wobei die Steuereinheit (150) Anforderung der Musikdatei, die die bestimmte Bedingung erfüllt, bei einer Musikdatei-Analysevorrichtung über die Netzwerk-Schnittstelle zum Empfang der auszugebenden Musikdatei steuert.

9. Vorrichtung nach Anspruch 1, wobei das Trainingsmuster durch eine Änderung des Trainingsmaßes im Verlauf der Zeit definiert wird, und eine abrupte Steigerung, eine Steigerung, eine Beibehaltung, eine Verringerung sowie eine abrupte Verringerung einschließt.

10. Vorrichtung nach Anspruch 1, wobei die Speichereinheit (130) eine Tabelle mit einem Trainingsmuster-Kennungsfeld, einem Ziel-Trainingsmaß-Feld zum Speichern eines akkumulierten Trainingsmaß-Wertes sowie ein Trainingsmaß-Listenfeld zum Speichern einer Liste von Trainingsmaß-Werten für jeweilige Trainingsmuster enthält.

11. Vorrichtung nach Anspruch 10, wobei das Trainingsmaß-Listenfeld Informationen über eine Perioden-Kennung, ein Trainingsmuster, ein Trainingsziel-Maß, eine Trainingszeit, eine Trainingsstrecke und eine bestimmte Musikdatei beinhaltet.

12. Vorrichtung nach Anspruch 1, wobei die Steuereinheit (150) die Musikdatei auswählt, deren Abspielzeit einer Trainingsperiodenzeit gleicht, wenn mehr als eine Musikdatei für eine Trainingsperiode bestimmt wird.

13. Vorrichtung nach Anspruch 1, wobei die Steuereinheit (150) Abspielen von Musikdateien in einer sequenziellen Reihenfolge steuert, wenn mehr als eine Musikdatei für eine Trainingsperiode bestimmt wird.

14. Vorrichtung nach Anspruch 1, wobei die Steuereinheit (150) den Bezugs-Trainingsplan und die Musikdatei zurücksetzt, wenn die aktuelle Trainingsperiode nicht endet, wenn das Abspielen der Musikdatei endet.

15. Vorrichtung nach Anspruch 1, wobei die Steuereinheit (150) den Bezugs-Trainingsplan und die Musikdatei zurücksetzt, wenn sich ein tatsächlich ausgeführtes Trainingsmuster von dem Bezugs-Trainingsmuster unterscheidet, nachdem die aktuelle Trainingsperiode endet.

16. Vorrichtung nach Anspruch 1, wobei die Steuereinheit (150) den Bezugs-Trainingsplan und die Musikdatei zurücksetzt, wenn biologische Informationen eines Benutzers außerhalb eines vorgegebenen Toleranzbereiches liegen.

17. Vorrichtung nach Anspruch 1, die des Weiteren einen Speicher (190) für Informationen über die Wirkung von Musik umfasst, der Informationen über Einflüsse der Musikdateien, die diese auf einen Trainingserfolg oder einen biologischen Status des Benutzers ausüben, sowie Gewichtwerte der Musikdateien speichert, die auf Basis der Einflüsse berechnet werden, wobei die Musikbestimmungseinheit den Gewichtwert zum Auswählen der Musikdatei verwendet.

18. Vorrichtung nach Anspruch 17, wobei der Speicher für Informationen über die Wirkung von Musik eine Tabelle enthält, die ein Musikdatei-Kennungsfeld, ein Feld zum Speichern biologischer Signale, ein Trainingserfolgsraten-Feld, ein Abspielhäufigkeits-Feld und ein Gewichtwert-Feld aufweist.

19. Vorrichtung nach Anspruch 18, wobei die Steuereinheit (150) Auswahl der Musikdatei mit einem höchsten Gewichtwert steuert, wenn mehr als eine Musikdatei für eine Trainingsperiode bestimmt wird.

20. Verfahren zum Verwalten einer Trainings-Unterstützungsvorrichtung, die umfasst:
Erstellen eines Bezugs-Trainingsplanes auf Basis von Benutzerinformationen,
Unterteilen des Bezugs-Trainingsplanes in eine vorgegebene Anzahl von Trainingsperioden;
Festlegen von Trainingsmustern und Zeiten der jeweiligen Trainingsperioden,
Bestimmen wenigstens einer Musikdatei, wobei dies eindeutiges Zuweisen wenigstens einer Musikdatei zu jeder Trainingsperiode einschließt;
Speichern des Bezugs-Trainingsplanes und der Musikdatei;
Ausgeben von Leitinformationen und hörbares Ausgeben der Musikdatei auf Basis des Bezugs-Trainingsplanes;
Anzeigen eines Bezugs-Trainingsmusters und eines tatsächlichen Trainingsmusters; und
Zurücksetzen des Bezugs-Trainingsplanes und der Musikdatei auf Basis einer biologischen Änderung des Benutzers während des Trainings.

21. Verfahren nach Anspruch 20, wobei Benutzerinformationen einschließen:
Körpermaß-Informationen, wie beispielsweise Größe, Gewicht, Alter und Geschlecht;
Ziel-Trainingsinformationen, wie beispielsweise Ziel-Trainingsmaß, Ziel-Trainingszeit, Zielstrecke, maximales Trainingsmaß und maximale Bewegungsstrecke;
Trainingsmaß-Informationen, wie beispielsweise akkumuliertes Trainingsmaß, abgelaufene Trainingszeit und akkumulierte Bewegungsstrecke;
Trainingsstärke-Informationen, wie beispielsweise Geschwindigkeit, Schrittfrequenz, Tempo, Gewichtsverteilung;
biologische Informationen, wie beispielsweise Pulsschlag, Körpertemperatur und Blutdruck; und
Präferenz-Informationen, wie beispielsweise bevorzugte Trainingsperiode, Dauer und bevorzugte Anzahl von Musikdateien pro Trainingsperiode.

22. Verfahren nach Anspruch 20, wobei der Schritt des Bestimmens wenigstens einer Musikdatei einschließt:
Festlegen von Trainingsmustern für die jeweiligen Trainingsperioden; und
Konfigurieren bestimmter Bedingungen für die Trainingsmuster.

23. Verfahren nach Anspruch 20, wobei der Schritt des Bestimmens wenigstens einer Musikdatei einschließt:
Festlegen von Trainingsmustern für die jeweiligen Perioden;
Konfigurieren bestimmter Bedingungen für jede Trainingsperiode auf Basis eines beliebigen von wenigstens zwei Trainingsmustern, des akkumulierten Trainingsmaßes und der verstrichenen Trainingszeit sowie biologischer Informationen oder einer Kombination derselben.

24. Verfahren nach Anspruch 22, wobei die Trainingsmuster durch eine Änderung des Trainingsmaßes im Verlauf der Zeit definiert werden und eine abrupte Steigerung, eine Steigerung, eine Beibehaltung, eine Verringerung und eine abrupte Verringerung einschließen.

25. Verfahren nach Anspruch 20, wobei der Schritt des Ausgebens von Leitinformationen Auswählen einer Musikdatei einschließt, die eine Abspielzeit hat, die der Trainingsperiode gleicht, wenn mehr als eine Musikdatei für jede Trainingsperiode bestimmt wird.

26. Verfahren nach Anspruch 20, wobei der Schritt des Ausgebens von Leitinformationen Abspielen von Musikdateien in einer sequenziellen Reihenfolge einschließt, wenn mehr als eine Musikdatei für jede Trainingsperiode bestimmt wird.

27. Verfahren nach Anspruch 20, wobei der Schritt des Zurücksetzens des Bezugs-Trainingsplanes und der Musikdatei einschließt:
Feststellen, ob die Trainingsperiode endet, wenn das Abspielen der Musikdatei endet; und
Ändern des Bezugs-Trainingsplanes und der abzuspielenden Musikdatei, wenn festgestellt wird, dass die aktuelle Trainingsperiode nicht zu Ende ist, wenn das Abspielen der Musikdatei endet.

28. Verfahren nach Anspruch 20, wobei der Schritt des Zurücksetzens des Bezugs-Trainingsplanes und der Musikdatei einschließt:
Feststellen, ob eine Differenz zwischen einem von einem Benutzer ausgewählten Trainingsmuster und dem Bezugs-Trainingsmuster außerhalb eines vorgegebenen Toleranzbereiches liegt; und
Ändern des Bezugs-Trainingsplanes und der abzuspielenden Musikdatei, wenn festgestellt wird, dass die Differenz außerhalb des Toleranzbereiches liegt.

29. Verfahren nach Anspruch 20, wobei der Schritt des Zurücksetzens des Bezugs-Trainingsplanes und der Musikdatei einschließt:
Feststellen, ob ein Wert der biologischen Änderung außerhalb eines vorgegebenen Toleranzbereiches liegt; und
Ändern des Bezugs-Trainingsplanes und der abzuspielenden Musikdatei, wenn festgestellt wird, dass der Wert der biologischen Änderung außerhalb des Toleranzbereiches liegt.

30. Verfahren nach Anspruch 20, das des Weiteren Speichern von Informationen über die Einflüsse der Wirkung von Musikdateien auf einen Trainingserfolg oder einen biologischen Status des Benutzers und von Gewicht-Werten der Musikdateien umfasst, die auf Basis der Einflüsse berechnet werden, wobei der Gewicht-Wert verwendet wird, um Musikdateien für die jeweiligen Bezugs-Trainingsperioden zu bestimmen.

31. Verfahren nach Anspruch 30, wobei der Gewicht-Wert verwendet wird, um die Musikdateien für jeweilige Bezugs-Trainingsperioden zurückzusetzen.

32. Verfahren nach Anspruch 30, wobei der Schritt des Ausgebens der Leitinformationen Auswählen der Musikdatei mit einem höchsten Gewicht-Wert einschließt, wenn mehr als eine Musikdatei für die Trainingsperiode bestimmt wird.

## Revendications

1. Un appareil d'assistance d'exercices comprenant :
une unité de programmation d'exercices (110) qui constitue un programme d'exercices de référence sur la base d'information d'utilisateur, où le programme d'exercices inclut un nombre de périodes d'exercices prédéterminé dans le temps, chaque période d'exercice présentant une structure d'exercice de référence ;
une unité de désignation de musique (120) qui désigne au moins un fichier musical pour le programme d'exercices de référence, où l'unité de désignation musicale vérifie une structure d'exercices de chaque période d'exercices et configure une condition désignée en accord avec la structure d'exercices ;
une unité de stockage (130) qui stocke le programme d'exercices de référence et le fichier musical désigné pour le programme d'exercices de référence ;
une unité de contrôle (150) qui récupère le programme d'exercices de référence et le fichier musical désigné pour le programme d'exercices de référence, génère de l'information directrice pour la récupération du fichier musical correspondant au programme d'exercice de référence, et réinitialise le programme d'exercices de référence et redésigne le fichier musical sur la base d'une structure d'exercices actuelle et un changement biologique d'un utilisateur qui s'exerce selon le programme d'exercices de référence ;
un haut-parleur (173) qui sort l'information directrice et le fichier musical ; et
une unité d'affichage (171) qui affiche une structure d'exercices de référence et une structure d'exercices actuelle.

2. L'appareil selon la revendication 1, où l'information d'utilisateur
comprend :
des informations sur les mensurations du corps telles la taille en hauteur, le poids, l'âge et le sexe ;
de l'information sur l'exercice cible telle la quantité des exercices cibles, le temps d'exercice cible, la distance cible, le montant d'exercices maximum, et la distance de mouvement maximum ;
l'information sur la quantité d'exercices telle que la quantité d'exercices accumulée, le temps d'exercice passé, et la distance de mouvement accumulée ;
l'information sur le degré de difficulté des exercices telle la vitesse, la fréquence des pas, le rythme et la distribution du poids ;I'information biologique telle le pouls, la température du corps et la pression artérielle ;
et
l'information de préférence telle la durée de la période d'exercices préférée, un nombre de fichiers musicaux préférés par période d'exercice.

3. L'appareil selon la revendication 1, où l'unité de désignation de la musique (120) désigne directement au moins un fichier musical pour chaque période d'exercice.

4. L'appareil selon la revendication 3 comprenant en outre une unité de stockage de fichier musical stockant des fichiers musicaux à repasser aux périodes d'exercice respectives.

5. L'appareil selon la revendication 3 comprenant en outre une interface de réseau (140) pour la connexion à un appareil de stockage externe stockant les fichiers musicaux désignés aux périodes d'exercice, les fichiers musicaux enregistrés dans l'appareil de stockage externe étant demandés pour les périodes d'exercice respectives.

6. L'appareil selon la revendication 1, où l'unité de désignation musicale (120) décide une structure d'exercice de chaque période d'exercice et configure une condition désignée sur la base d'au moins deux parmi la structure d'exercice actuelle, une quantité d'exercice accumulée et une durée d'exercice écoulée, et de l'information biologique.

7. L'appareil selon la revendication 1 comprenant en outre :
Une mémoire de fichier musical qui enregistre les fichiers musicaux pour le playback aux périodes d'exercice respectives ; et
une unité d'analyse de fichier musical qui récupère au moins un fichier musical satisfaisant à la condition désignée,
où l'unité de contrôle (150) contrôle la sélection du fichier musical à partir de la mémoire de fichier musical et de la sortie du fichier musical sélectionné.

8. L'appareil selon la revendication 1 comprenant en outre :
Une mémoire de fichier musical qui enregistre les fichiers musicaux pour le playback aux périodes d'exercice respectives ; et
une interface de réseau pour la connexion à un appareil d'analyse de fichier musical qui récupère au moins un fichier musical satisfaisant à la condition désignée,
où l'unité de contrôle (150) contrôle la demande du fichier musical satisfaisant à la condition désignée à un appareil d'analyse de fichier musical à travers l'interface de réseau pour la réception du fichier musical devant être sorti.

9. L'appareil de la revendication 1, où la structure d'exercice est définie par une variation de la quantité d'exercices dans le temps et inclut une augmentation abrupte, une augmentation, une maintenance, une baisse et une baisse abrupte.

10. L'appareil selon la revendication 1, où l'unité de stockage (130) inclut un tableau disposant d'une case d'identification de la structure d'exercice, une case de quantité d'exercice cible pour le stockage de la valeur de quantité d'exercice accumulée, et une case de liste de quantité d'exercice pour le stockage d'une liste de valeurs de quantité d'exercice pour des structures d'exercice respectives.

11. L'appareil selon la revendication 10, où la case de liste de quantité d'exercice contient l'information sur une identification de période, structure d'exercice, quantité d'exercice cible, durée d'exercice, distance d'exercice, et fichier musical désigné.

12. L'appareil selon la revendication 1, où l'unité de contrôle (150) sélectionne le fichier musical dont la durée de playback est similaire à une durée de période d'exercice si plus d'un fichier musical est désigné pour une période d'exercice.

13. L'appareil selon la revendication 1, où l'unité de contrôle (150) contrôle le passage des fichiers musicaux dans un ordre séquentiel si plus d'un fichier musical est désigné pour une période d'exercice.

14. L'appareil selon la revendication 1, où l'unité de contrôle (150) réinitialise le programme d'exercices de référence et le fichier musical si la période d'exercice courante n'est pas terminée lorsque le playback du fichier musical se termine.

15. L'appareil selon la revendication 1, où l'unité de contrôle (150) réinitialise le programme d'exercice de référence et le fichier musical si une structure d'exercice actuellement prise diffère de la structure d'exercice de référence après que la période d'exercice courante s'est terminée.

16. L'appareil selon la revendication 1, où l'unité de contrôle (150) réinitialise le programme d'exercices de référence et le fichier musical si l'information biologique de l'utilisateur est hors de la plage de tolérance prédéterminée.

17. L'appareil selon la revendication 1, comprenant en outre une mémoire d'information de contribution musicale (190) qui stocke de l'information sur les influences de la contribution des fichiers musicaux à un accomplissement d'exercice ou à un état biologique de l'utilisateur et des valeurs de poids des fichiers musicaux calculées sur la base des influences, où l'unité de désignation musicale utilise la valeur de poids pour sélectionner le fichier musical.

18. L'appareil selon la revendication 17, où la mémoire de l'information de contribution musicale comprend un tableau présentant une case d'identification de fichier musical, une case de stockage du signal biologique, une case de taux d'accomplissement d'exercice, une case de fréquence de playback, et une case pour la valeur de poids.

19. L'appareil selon la revendication 18, où l'unité de contrôle (150) contrôle la sélection du fichier musical présentant le poids le plus élevé si plus d'un fichier musical est désigné pour une période d'exercice.

20. Un procédé pour la gestion d'un appareil d'assistance d'exercice comprenant :
la construction d'un programme d'exercices de référence basé sur de l'information d'utilisateur ;
la division du programme d'exercices de référence en un nombre de périodes d'exercice prédéterminé ;
la décision des structures et des durées d'exercice des périodes d'exercice respectives la désignation d'au moins un fichier musical incluant l'assignation d'au moins un fichier musical unique à chaque période d'exercice ;
le stockage du programme d'exercices de référence et du fichier musical ;
la sortie de l'information directrice et la sortie par voie audible du fichier musical basé sur le programme d'exercices de référence ;
l'affichage d'une structure d'exercice de référence et d'une structure d'exercice actuelle ; et la réinitialisation du programme d'exercice de référence et du fichier musical sur la base d'une modification biologique de l'utilisateur pendant l'exercice.

21. Le procédé selon la revendication 20, où l'information d'utilisateur inclut :
l'information sur les mensurations du corps telle la tailler en hauteur, le poids, l'âge et le genre ; l'information d'exercice cible telle la quantité d'exercice cible, la durée d'exercice cible, la distance d'exercice cible, la quantité d'exercice maximum, et la distance de mouvement maximum ; l'information sur la quantité d'exercice telle la quantité d'exercice accumulée, la durée d'exercice écoulée, et la distance de mouvement accumulée ; l'information du degré de difficulté d'exercice telle la vitesse, le pas, la fréquence, le rythme, la répartition du poids ; l'information biologique telle le pouls, la température du corps, et la tension artérielle ; et l'information de préférence telle la période d'exercice préférée, la durée et le nombre préféré de fichiers musicaux par période d'exercice.

22. Procédé selon la revendication 20, où l'étape de désignation d'au moins un fichier musical inclut:
la décision de structures d'exercice pour les périodes d'exercice respectives ; et la configuration des conditions désignées pour les structures d'exercice.

23. Le procédé selon la revendication 20, où l'étape de désignation d'au moins un fichier musical inclut:
la décision des structures d'exercices pour les périodes respectives ;
la configuration des conditions désignées de chaque période d'exercice sur la base d'une ou d'une combinaison d'au moins deux de structures d'exercices, de la quantité d'exercices accumulée et la durée d'exercice écoulée, et de l'information biologique.

24. Le procédé selon la revendication 22, où les structures d'exercice sont définies par une variation de la quantité d'exercices dans le temps, et incluent une augmentation abrupte, une augmentation, une maintenance, une baisse et une baisse abrupte.

25. Le procédé selon la revendication 20, où l'étape de sortie de l'information directrice inclut la sélection d'un fichier musical disposant d'une durée de playback similaire à la période d'exercice si plus d'un fichier musical est désigné pour chaque période d'exercice.

26. Le procédé selon la revendication 20, où l'étape de sortie de l'information directrice inclut le playback des fichiers musicaux dans un ordre séquentiel si plus d'un fichier musical est désigné pour chaque période d'exercice.

27. Le procédé selon la revendication 20, où l'étape de réinitialisation du programme d'exercices de référence et du fichier musical inclut :
la détermination si la période d'exercice courante se termine lorsque le playback du fichier musical se termine ; et
la modification du programme d'exercice de référence et du fichier musical à passer en playback s'il est déterminé que la période d'exercice courante n'est pas terminée lorsque le playback du fichier musical se termine.

28. La méthode selon la revendication 20, où l'étape de réinitialisation du programme d'exercices de référence et le fichier musical incluent :
la détermination si une différence entre une structure d'exercice sélectionné par un utilisateur et la structure d'exercice de référence est hors d'une plage de tolérance prédéterminée ; et
la modification du programme d'exercice de référence et du fichier musical à passer en playback s'il est déterminé que la différence est hors de la plage de tolérance.

29. Le procédé selon la revendication 20, où l'étape de réinitialisation du programme d'exercices de référence et le fichier musical inclut :
la détermination si une valeur de la modification biologique est hors d'une plage de tolérance prédéterminée; et
la modification du programme d'exercice de référence et du fichier musical à passer en playback s'il est déterminé que la différence est hors de la plage de tolérance.

30. Le procédé selon la revendication 20 comprenant en outre stocker des informations sur les influences de la contribution des fichiers musicaux à un accomplissement d'exercice ou à un état biologique de l'utilisateur et des valeurs de poids des fichiers musicaux calculées sur la base des influences, la valeur de poids étant utilisée pour désigner les fichiers musicaux pour les périodes d'exercice respectives.

31. Le procédé selon la revendication 30, où la valeur de poids est utilisée pour la réinitialisation des fichiers musicaux pour des périodes d'exercice de référence respectives.

32. Le procédé selon la revendication 30, où l'étape de sortie de l'information directrice inclut la sélection du fichier musical disposant la valeur de poids la plus élevée si plus d'un fichier musical est désigné pour la période d'exercice.
